(19) Europäisches Patentamt

European Patent Office

Office européen des brevets

(11) **EP 1 609 827 A1**

(12) **EUROPEAN PATENT APPLICATION**

(43) Date of publication:
**28.12.2005 Bulletin 2005/52**

(51) Int Cl.⁷: **C09D 11/00**

(21) Application number: **05253628.1**

(22) Date of filing: **13.06.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **22.06.2004 US 581820 P**

(71) Applicant: **ROHM AND HAAS COMPANY
Philadelphia, Pennsylvania 19106-2399 (US)**

(72) Inventors:
• **Chung, Chao-Jen
North Wales Pennsylvania 19454 (US)**
• **Johnson, Eric Alvin
Lansdale Pennsylvania 19446 (US)**

(74) Representative: **Kent, Venetia Katherine et al
Rohm and Haas (UK) Ltd
European Patent Department
28th. Floor, City Point
One Ropemaker Street
London EC2Y 9HS (GB)**

(54) **Polymeric binders for ink jet links**

(57)    A polymeric binder useful in making ink formulations, especially inkjet ink formulations, is described, whereby the acid monomer in the polymer is heterogeneously distributed. Also described is the method of making such binder. The inks prepared using the polymeric binders of the invention provide inks with improved print appearance and print performance.

EP 1 609 827 A1

## Description

This invention concerns polymeric binders which are suitable for use in ink jet inks. More specifically, this invention relates to ink jet inks comprised of polymeric binders comprising as polymerized units, acid monomers, whereby the acid monomer in the polymer is heterogeneously distributed. Furthermore this invention relates to a method of making binders comprising a heterogeneous distribution of polymerized acid and relates to ink jet inks prepared using such binders.

Certain ink jet inks comprise a liquid medium, a colorant, such as a pigment or dye, a binder or resin to aid in dispersing the pigment in the medium and to affix the colorant to the print surface. In order to create more durable print quality, particularly in terms of color-fastness and water- and rub-resistance of the printing ink, there has been interest in preparing ink jet inks which contain polymeric binders that improve the water- and rub-resistance of the printed image. Dye based colorants are generally absorbed to some degree by the paper or other print medium, but due to their inherent water-solubility do not offer good waterfastness. Pigment-based inks are generally deposited on the surface of the print medium, making them susceptible to removal by water or abrasion. As a result, both types of ink jet inks have a tendency to have insufficient wet rub resistance and highlighter resistance for many applications. Polymeric binders have been added to ink jet ink compositions to improve durability, to improve print quality and to reduce color bleeding and feathering. However, the inclusion of such binders can sometimes result in increased printhead maintenance problems, including clogging of the nozzles and kogation. Also, polymers may impact the rheology of the ink jet inks, and also may form films on the nozzle plate, restricting the speed and accuracy of the printing operation. The addition of polymers to ink jet ink compositions also may cause decreased pigment dispersion stability and, in the case of thermal printheads, interfere with bubble formation. The challenge of achieving good print operability is increasing in difficulty as printers are being driven to deliver higher performance.

The term "wet-rub," as used herein, means applying abrasive pressure across the printed substrate with a wetted paper facial tissue and measuring any smear created thereby; wet-rub differs from waterfastness because abrasion is used. The term "highlighter resistance," as used herein, means applying abrasive pressure across a printed substrate with a commercially available highlighting marker and measuring any smear created thereby; an example of such marker is Sanford Corp. Major Accent brand highlighting markers. The term "print quality", as used herein, means an accumulative evaluation of the overall performance of an ink jet ink as measured by the appearance of a printed page of combined text and graphics, including edge sharpness, bleed, feathering, optical density, wet-rub resistance, highlighter resistance and print operability. The term "print operability", as used herein, means an accumulative evaluation of printer performance, including print appearance and uniformity, page after page longevity of print quality and uniformity, nozzle drop outs, print head maintenance problems, and the ability to stop and restart printing.

EP-A-0869160 discloses an inkjet ink formulation with colorant, vehicle and resin emulsion containing ionic carboxylic groups in the resin emulsion particles to cause disassociation of the colorant and resin particles. The resin has 1 to 40 wt.% "carboxylic acid groups", and Tg of 0 to 120°C. Exemplified embodiments of the resin include copolymers of butyl acrylate, methyl methacrylate and (meth)acrylic acid, with 3 to 20 wt.% acid, Tg of 53 to 95°C and particle size of 63 to 235 nm, utilizing high Tgs and low particle sizes.

US6541590B1 discloses an ink jet binder based on the combination of a polymerizable surfactant (0.05 to 5 wt %) and ethylenically unsaturated carboxylic acid (4 to 5 wt %). Exemplified embodiments of the resin include copolymers of (meth)acrylate monomers and carboxylic acid monomers that result in a Tg of -40°C to 120°C, and a molecular weight in the range of 10,000 to 2,000,000 Daltons. The emulsion latex particles have a average particle size of 100 to 400 nm.

It is an object of the present invention to provide a polymeric binder for use with a colorant to form an ink jet ink that demonstrates improved print operability and print appearance characteristics, as described above.

For the purpose of this invention the following parameters are defined and described below:

1. Percent (%) titratable acid is defined as the percentage of total latex acid charge that is detected when a sample of the latex is titrated with HCl (0.5 N) in a water medium.
2. "R" is the acid distribution ratio and is determined by the formula,

$$R = [\% \text{ titratable acid} / (100\% - \% \text{ titratable acid})].$$

3. "Heterogeneously distributed" or "distributed heterogeneously" or variations thereof, means that the percentage of monomer in the emulsified polymer particle varies such that from the inside to the outer surface of the polymer particle the polymer acid concentration increases, as indicated by the acid distribution ratio "R."

Accordingly, the present invention provides an inkjet ink binder comprising, as polymerized units, ethylenically unsaturated acid functional monomers wherein said acid functional monomers in said inkjet ink binder are heterogeneously distributed such that the acid distribution ratio ("R") is greater than or equal to 5. The present invention further provides an inkjet ink comprising, (a) an aqueous vehicle, (b) a colorant, and (c) a binder comprising, as polymerized units, ethylenically unsaturated acid functional monomers wherein said acid functional monomers in said inkjet ink binder are heterogeneously distributed and the acid distribution ratio ("R") is greater than or equal to 5. The present invention further provides an inkjet ink binder comprising, as polymerized units, ethylenically unsaturated acid functional monomers wherein said acid functional monomers in said inkjet ink binder are heterogeneously distributed and the acid distribution ratio ("R") is greater than or equal to 5, whereby the heterogeneous acid distribution is achieved by one or more of: (a) varying the acid monomer concentration of the monomer feed during the polymerization reaction; (b) using two or more acid functional monomers which differ in their rates of incorporation into said inkjet ink binder; (c) using at least two monomer mixtures that vary in acid concentration by at least 40 weight percent; or (d) combinations thereof.

Ink jet inks comprising a binder of the present invention demonstrate improvements over similar binders which comprise polymerized acid which is uniformly distributed, in one or more of the properties that define print operability. In addition, ink jet inks of the present invention may also demonstrate improvements in one or more of the properties that define print appearance.

The binder of said invention may be prepared using any ethylenically unsaturated monomer that provides an acidic functional group. Carboxylic acid functional monomers are preferably ethylenically unsaturated carboxylic acids, more preferably monomers selected from the group consisting of acrylic acid, methacrylic acid, itaconic acid, fumaric acid, maleic acid and anhydrides of such acids; their basic salts e.g. the ammonium, quaternary alkyl ammonium, lithium, sodium and potassium salts thereof; and mixtures of such monomers. Alternatively, the ethylenically unsaturated carboxylic acid monomer may be an oligomer of acrylic or methacrylic acid, preferably having a molecular weight of no more than 5000 Daltons. Alternatively, other acids that can be used to prepare the binder of the invention include but are not limited to sulfonic acids such as for example 2-acrylamido-2-methyl propane sulfonic acid, styrene sulfonic acid, vinyl sulfonic acid; and phosphorous acid monomers such as 2-phosphoethyle (meth)acrylate, vinyl phosphoric acid, and vinyl phosphinic acid.

The polymeric binder is an emulsion-polymerized addition copolymer comprising as polymerized units, no greater than 15 weight percent (wt. %) acid monomers on total polymer, or no greater than 10 wt. % or even no greater than 8.0 wt. %. Preferably the binder comprises at least 0.5 wt. % acid monomers as polymerized units. Moreover, the polymeric binder is an emulsion-polymerized addition copolymer whereby the distribution of the acid monomers in the polymer is heterogeneous, such that R is greater than or equal to 5, or greater than or equal to 10, or even greater than or equal to 20.

Other ethylenically unsaturated monomers suitable for use in said monomer mixture may include one or more monomers selected from, but not limited to: substituted, e.g. hydroxy- or acetoacetoxy-substituted and unsubstituted ($C_1$ to $C_{50}$, preferably $C_1$-$C_{22}$, most preferably $C_1$ to $C_{18}$) alkyl (meth) acrylates, styrene and substituted styrenes, vinyl acrylates, vinyl acetates, fluoromethacrylates, acrylamide, substituted acrylamides, methacrylamides, substituted methacrylamides, and combinations thereof. Among the esters of acrylic acid and methacrylic acid, preferred monomers include methyl acrylate, ethyl acrylate, propyl acrylate, butyl acrylate, ethylhexyl acrylate, lauryl acrylate, methyl methacrylate, ethyl methacrylate, propyl methacrylate, butyl methacrylate, lauryl methacrylate, isobutylene methacrylate, hydroxyethyl (meth)acrylate and acetoacetoxy (meth)acrylate. Most preferably, the monomers are selected from the group consisting of methyl acrylate, ethyl acrylate, propyl acrylate, butyl acrylate, ethylhexyl acrylate, lauryl acrylate, methyl methacrylate, ethyl methacrylate, propyl methacrylate, butyl methacrylate, lauryl methacrylate, isobutylene methacrylate, styrene, acrylamide, vinyl acrylate, vinyl acetate, hydroxyethyl acrylate and hydroxyethyl methacrylate.

Other ethylenically unsaturated monomers suitable for use in said invention include stabilizing monomers known in the art such as for example, poly(ethylene glycol)methyl ether (meth)acrylate, or polymerizable surfactant monomers known in the art such as for example those described in US6541590B1, or mixtures thereof.

The binder of the present invention may further comprise additional components which do not substantially alter the characteristics described above, including without limitation process aids such as surfactants (emulsifiers), protective colloids, and other stabilizers known to those skilled in the art such as for example polymeric dispersants including but not limited to random, block and graft copolymer dispersants, and basic components and biocidal components. Suitable surfactants, for example, include sodium lauryl sulfate, sodium dodecylbenzene sulfonate, sodium dioctyl sulfosuccinate, and ammonium perfluroralkyl sulfonates, Triton™ X-100, Triton X-405, and polyoxyethylenated polyoxypropylene glycols.

Preferably the binder comprises an addition polymer with a glass transition temperature, Tg, of at least -40°C, or in the range from -35 to about 120°C, or in the range from -35 to 20°C. Tg can be determined by the Fox equation. The polymer binder comprises an addition polymer with and average diameter small enough to be jettable through an ink jet printhead, typically less than 600nm, or less than 400 nm. The particle size distribution of the binder polymer may be unimodal, bimodal or polymodal..

The molecular weight of the polymeric binder of the invention can be in the range from about 5,000 to about 2,000,000 Daltons, or in the range of 50,000 to 1,000,000 Daltons. The molecular weight as used herein is defined as the weight average molecular weight and may be determined by gel permeation chromatography in THF as solvent.

The binder may be incorporated in an ink composition, preferably an ink jet ink composition, comprising, for example, pigment, binder and an aqueous medium. Depending on the ink jet ink printer and printhead the binder is present at a level of 0.1 to 15 weight percent, or, 0.5 to 8 weight percent, or 1 to 5 weight percent relative to the total weight of the ink composition. The aqueous carrier may be water; preferably, deionized water. In one embodiment, the aqueous carrier is present at from about 40% to about 95%, or from about 55% to about 80%, or from about 70% to about 80% by weight of the ink composition. Selection of a suitable mixture for the ink composition using the binder of the present invention depends upon the requirements of the specific ink being formulated, such as the desired surface tension and viscosity, the pigment used, the drying time required for the pigmented ink and the type of substrate onto which the ink will be printed.

The ink composition using the binder of the present invention may also include water miscible materials such as humectants, dispersants, penetrants, chelating agents, co-solvents, defoamers, buffers, biocides, fungicides, viscosity modifiers, bactericides, surfactants, anti-curling agents, anti-bleed agents and surface tension modifiers, all as is known in the art. Useful humectants include ethylene glycol, 1,3 propanediol, 1,4 butanediol, 1.4 cyclohexanedimethanol, 1,5 pentanediol, 1,6 hexanediol, 1,8 octanediol, 1,2 propanediol, 1,2 butanediol, 1,3 butanediol, 2,3 butanediol, diethylene glycol, triethylene glycol, tetraethylene glycol, polyethylene glycol, or mixtures of polyethylene glycols, with average molecular weight from about 200 to about 70000,, dipropylene glycol, polypropylene glycol or mixtures of polyethylene glycols, with average molecular weight from about 200 to about 70000, 2-pyrrolidone, 1-methyl-2-pyrrolidone, polyvinylpyrrolidone, 1-methyl-2-piperidone, N-ethylacetamide, N-methlpropionamide, N-acetyl ethanolamine, N-methylacetamide, formamide, 3-amino-1, 2-propanediol, 2,2-thiodiethanol, 3,3-thiodipropanol, tetramethylene sulfone, butadiene sulfone, ethylene carbonate, butyrolacetone, tetrahydrofurfuryl alcohol, glycerol, 1,2,4-butenetriol, trimethylpropane, pantothenol, Liponic EG-1. Preferred humectants are polyethylene glycol with average molecular weight of 400 to 1000, 2-pyrrolidone 2,2 thiodiethanol, and 1,5 pentanediol. Preferred penetrants include n-propanol, isopropyl alcohol, 1,2 hexanediol, and hexyl carbitol.

The ink composition of the present invention may further comprise additional components including without limitation process aids such as other (free) surfactants, protective colloids, and other stabilizers known to those skilled in the art. Suitable surfactants, for example, include sodium lauryl sulfate, sodium dodecylbenzene sulfonate, sodium dioctyl sulfosuccinate, and ammonium perfluroralkyl sulfonates, Triton X-100, Triton X-405, and polyoxyethylenated polyoxypropylene glycols, and fluoro functional and silicon functional surfactants such as for example those described in EP-A-0882770.

Examples of colorants useful in the method of the present invention are selected from the group of pigments and dyes generally useful in ink jet printing. Suitable organic pigments include carbon black, azo compounds, phthalocyanine pigments, quinacridone pigments, anthraquinone pigments, dioxazine pigments, indigo, thioindigo pigments, perynone pigments, perylene pigments, and isoindolene. Suitable inorganic pigments include titanium dioxide, iron oxide, and other metal powders. The amount of pigment is generally determined by the desired properties of the ink to be made. Suitable pigments for use in this invention may include polymer dispersed, self dispersed or mixtures thereof. Dyes suitable as colorants for use in this invention include water soluble dyes, dispersed dyes and polymer dispersed dyes, such as for example those described in WO0250197A1 and US6455611B1, or mixtures thereof.

Generally, the amount of colorant used is less than 10% and is typically from 3-6% by weight based on the total weight of all the components of the ink. A plurality of inks may be combined to form a set, such as a set of cyan, yellow, magenta, and black, as well as any combination of known colors used as sets in inkjet ink printing.

The amount of humectant used is determined by the properties of the ink and may range from 1-30%, preferably from 5-15% by weight, based on the total weight of all the components in the ink. Examples of commonly used humectants useful in forming the ink are: glycols, polyethylene glycols, glycerol, ethanolamine, diethanolamine, alcohols, saccharides and pyrrolidones. Other humectants known in the art may be used as well.

The use of suitable penetrants will depend on the specific application of the ink. Useful examples include pyrrolidone, and N-methyl-2-pyrrolidone.

The amount of defoaming agent in the ink, if used, will typically range from 0.05-0.5% by weight, and is more typically 0.1 wt.%. The amount required depends on the process used in making the pigment dispersion component of the ink. Defoaming agents useful in forming aqueous dispersions of pigments are well known in the art and commercially available examples include Surfynol 104H and Surfynol DF-37 (Air Products, Allentown, PA).

The remaining portion of the ink is generally water. The amount of water preferably is from 45-90% by weight, or from 55-80% by weight, based on the total weight of all the components in the ink.

The ink compositions of the present invention may be prepared by any method known in the art for making such compositions, for example, by mixing, stirring or agitating the ingredients together using any art recognized technique to form an aqueous ink. The procedure for preparation of the ink composition of the present invention is not critical except to the extent that the ink composition is homogenous.

While not meant to be limiting as a method of preparing the ink of the current invention, one method for preparation is as follows: Mix the aqueous carrier, humectant(s), surfactant(s) and penetrant(s) for 10 minutes, or until homogenous. Prepare pigment-dispersant mixture by milling a 5 to 1 ratio of pigment to dispersant to a total of 20% solids in water. Slowly add aqueous carrier/humectant/surfactant/penetrant solution to pigment-dispersant while pigment(s) remains stirring. Let stir for another 10 minutes, or until homogeneous. Slowly add the carrier, pigment dispersion, , humectant, surfactant to the polymeric binder with stirring. Continue to stir for 10 minutes or until homogenous. Adjust pH of the resultant ink to 7.5 - 9.0 (e.g. by adding sufficient 20% $NH_4OH$). Filter through a 1 micrometer filter.

It is expected that the ink compositions using the binders of the present invention would include any additives necessary to obtain the desired physical properties required for the end use of the ink composition such additives include chelating agents, buffers, biocides, fungicides, antioxidants, rheology modifiers, thickeners, bacteriocides, surfactants, anti-curling agents, anti-bleed agents and surface tension modifiers, all as discussed above.

The invention in some of its embodiments will now be further described by reference to the following examples:

EXAMPLES

Comparative Example A:

After heating a reaction vessel containing 225 ml deionized, buffered water (0.169 meq buffer/gm of water) and 1.3 g sodium lauryl sulfate (SLS, 28% Solids) to 88°C, 4% of a mixture of 293 g water, 3.56 g of SLS (28%), 175 g methyl methacrylate (MMA), 388 g butyl acrylate (BA), and 7.5 g MAA are added with a 6g water rinse followed by 2.25 g sodium persulfate (NaPS) in 4.7 g of water. This combination is held at 88°C for 10 minutes. Then, the remaining monomer mix is added over a period of 60-120 minutes followed by a water rinse of 8.5g. After the monomer addition is completed, the vessel is held at 88°C for 35 minutes and then cooled to 50°C, followed by the addition of 1136g of deionized water. The mixture is further cooled to 30°C and a 27 g portion of 4% KOH in water is used to neutralize the sample to a pH of 8.7. The product is then filtered through 100 and 325 mesh screens. To 500g of the filtered product is added 0.78g of SLS (28%) to give the final sample. The % solids level of the sample is 25.0%, the average particle size is 270nm (wt. Ave, CHDF), and 291nm (vol. Ave, Microtrac) and the Tg is -10.6°C (DSC).

Comparative Example B: Preparation of 52EHA/43MMA/5MAA Latex

A five liter flask is charged with 2100 g of deionized water, placed under a nitrogen atmosphere, and heated to 85° C. A monomer emulsion consisting of 615 g 2-ethylhexyl acrylate (52 parts), 507.5 g methyl methacrylate (43 parts), 59.84 g methacrylic acid (5 parts), 6.7 g of TREM LF-40 solution (36%, Henkel Corp.), and 402 g deionized water is separately prepared. Prior to addition of this emulsion to the kettle, 8.94 g of 29% ammonia in 89.3 g deionized water, 2.46 g ammonium persulfate in 22.33 g deionized water, and 50.24g of 22.8% of a 60 nm acrylic polymer seed are added to the kettle. The monomer emulsion is then fed to the kettle with stirring at a rate of 6.92 g/min. for 20 min. along with a solution of 54.8 g of 2.24% aqueous ammonium persulfate at a rate of 0.45 g/min., followed by 100 minutes at 14.51 and 0.45 g/min., respectively, and a hold period of 20 min. The mixture is then cooled to 60° C, and a mixture of 8.7 g of 0.1% ferrous sulfate followed by 7.2 g of 4.4% t- butyl hydroperoxide and 13.62 g of 1.6% sodium formaldehyde sulfoxylate is added and held for 20 min., followed by a second identical portion of tBHP and SFS. The mixture is then cooled, filtered, and sufficient 4% aqueous potassium hydroxide is added to adjust the pH to a range of 8.0-9.0 (final polymer binder=27% by weight polymer solids, average diameter 260 nm and pH 8.9).

Example 1. Preparation of a 52EHA/43MMA/5MAA latex with heterogeneously distributed acid concentration.

A five liter flask is charged with 1700 g of deionized water, placed under a nitrogen atmosphere, and heated to 85° C. A first monomer emulsion consisting of 441.83 g 2-ethylhexyl acrylate (53.4 parts), 365.36 g methyl methacrylate (44.2parts), 19.69 g methacrylic acid (2.4 parts), 4.69 g of TREM LF-40 solution (36%, Henkel Corp.), and 281.3 g deionized water and a second monomer emulsion consisting of 172.42 g 2-ethylhexyl acrylate (48.6 parts), 142.58 g methyl methacrylate (40.2parts), 39.38 g methacrylic acid (11.2 parts), 2.01 g of TREM LF-40 solution (36%, Henkel Corp.), and 120.6 g deionized water are separately prepared. Prior to feed the first monomer emulsion to the kettle, 8.94 g of 29% ammonia in 89.3 g deionized water, 2.91 g potassium persulfate in 92.33 g deionized water, and 50.24g of 22.8% of a 60 nm acrylic polymer seed are added to the kettle. The first monomer emulsion is then fed to the kettle with stirring at a rate of 6.92 g/min. for 20 min. along with a solution of 54.8 g of 2.66% aqueous potassium persulfate at a rate of 0.45 g/min., followed by 67 minutes at 14.51 and 0.45 g/min., respectively. Immediately after first monomer emulsion feed is finished, the second monomer emulsion is fed at a rate of 14.51 g/min. for 33 min.

along with the aqueous ammonium persulfate solution at a rate of 0.45 g/min The mixture is held for 20 min. after the second monomer emulsion is finished and then cooled to 60° C., and a mixture of 8.7 g of 0.1% ferrous sulfate followed by 7.2 g of 4.4% t- butyl hydroperoxide and 13.62 g of 1.6% sodium formaldehyde sulfoxylate is added and held for 20 min., followed by a second identical portion of tBHP and SFS. The mixture is then cooled, filtered, and sufficient 4% aqueous potassium hydroxide is added to adjust the pH to a range of 8.0-9.0

Example 2 Preparation of a 51.8EHA/45.6MMA/2.6 latex with heterogeneously distributed acid concentration.

Charge a five liter flask with 1600 g of deionized water and 1.0 g of TREM LF-40 solution (36%, Henkel Corp.), placed under a nitrogen atmosphere, and heated to 85° C. A first monomer emulsion consisting of 510.3 g 2-ethylhexyl acrylate (54 parts), 425.2 g methyl methacrylate (45parts), 9.45 g methacrylic acid (1 parts), 4.56 g of TREM LF-40 solution (36%, Henkel Corp.), and 321.5 g deionized water and a second monomer emulsion consisting of 101.6 g 2-ethylhexyl acrylate (43 parts), 113.4 g methyl methacrylate (48parts), 21.26 g methacrylic acid (9 parts), 1.14 g of TREM LF-40 solution (36%, Henkel Corp.), and 80.4 g deionized water are separately prepared. Prior to feed the first monomer emulsion to the kettle, 10.67 g of potassium carbonate in 89.3 g deionized water, 2.91 g potassium persulfate in 92.33 g deionized water, and 95.33g of first monomer emulsion are added to the kettle. After the reaction is initiated with stirring for 15 minutes at 85° C, The first monomer emulsion is then fed to the kettle with stirring at a rate of 6.92 g/min. for 20 min. along with a solution of 54.8 g of 2.24% aqueous potassium persulfate at a rate of 0.45 g/min., followed by 72 minutes at 14.51 and 0.45 g/min., respectively. Immediately after first monomer emulsion feed is finished, the second monomer emulsion is fed at a rate of 14.51 g/min. for 23 min. along with the aqueous potassium persulfate solution at a rate of 0.45 g/min The mixture is held for 20 min. after the second monomer emulsion is finished and cooled to 60° C., and a mixture of 8.7 g of 0.1% ferrous sulfate followed by 7.2 g of 4.4% t- butyl hydroperoxide and 13.62 g of 1.6% sodium formaldehyde sulfoxylate is added and held for 20 min., followed by a second identical portion of tBHP and SFS. The mixture is then cooled, filtered, and sufficient 4% aqueous potassium hydroxide is added to adjust the pH to a range of 8.0-9.0.

Procedure for Titration of Polymer Acid:

1. Sample preparation for determination of titratable acid:

Dilute a known amount (2-10 grams) of latex with deionized water to 30 g total sample weight.

2. Titration of 30 g samples with 0.50N HCl:

The pH of the samples was adjusted to pH = 12.0 with 0.5N KOH and titrated with 0.50N HCl with Radiometer TTT 80 titrator (by Radiometer America), RHM 84 Research pH meter (by Radiometer America) and autoburette ABU80 titrating system (by Radiometer America). The % titratable acid in each titration is calculated as acid titer/total acid in the latex *100%. The acid titer (mmoles) is equal to the volume (ml between two peaks of the first derivatives of the titration curve) X 0.5N. The total acid in the latex (mmole)= (weight of latex) X (solids of latex) X (%MAA in the latex composition) X 1000/86. The acid distribution ratio (R) = [% titratable acid / (100% -% titratable acid)].

Table 1:

| Expected R for Latex Examples | |
|---|---|
| Sample | Expected R |
| Comparative 1 | <5 |
| Comparative 2 | <5 |
| Example 1 | ≥5 |
| Example 2 | ≥5 |

The performance advantages of the examples can be realized by formulating the polymeric binders of the invention into an ink jet ink formulation known to one skilled in the art. While not meant to be limited to the examples shown two examples of ink jet ink formulations are shown in the table below.

| Inkjet Ink Formulation 1 | Weight | Ink Jet Ink Formulation 2 | Weight |
|---|---|---|---|
| n-MethylPyrollidone | 6.5g | n-MethylPyrollidone | 6.4g |
| PolyEthyleneGlycol | 4.0g | PolyEthyleneGlycol | 4.0g |
| Color Dispersion | 25.0g | Color Dispersion | 24.8g |
| Propanediol | 10.2g | Propanediol | 4.8g |
| Polymer Binder | 20.0g | Liponics EG-1 | 2.0g |
| Water | 54.3g | Surfynol 104E | 0.4g |
| Total | 120.0g | Polymer Binder | 20.0g |
| | | Water | 57.6g |
| | | Total | 120.0g |

Liponics EG-1 is a dispersant available from Lipo Chemicals, New Jersey.Surfynol 104E is a dispersant available from Air Products, PA.

When formulated into an ink jet ink formulation, the binders described in Comparative Examples A and B are expected to show inferior performance to the binders of Examples 1 and 2 in one or more of the properties that define print operability or print quality.

## Claims

1. An inkjet ink binder comprising, as polymerized units, ethylenically unsaturated acid functional monomers wherein said acid functional monomers in said inkjet ink binder are heterogeneously distributed such that the acid distribution ratio ("R") is greater than or equal to 5.

2. The inkjet ink binder of claim 1 wherein R is greater than or equal to 10.

3. The inkjet ink binder of claim 1 wherein said acid functional monomers make up no greater than 15 weight percent (wt. %) on total polymer.

4. The inkjet ink binder of claim 3 wherein said acid functional monomers make up at least 0.5 wt. % on total polymer.

5. An inkjet ink comprising,

    (a) an aqueous vehicle,
    (b) a colorant, and
    (c) a binder comprising, as polymerized units, ethylenically unsaturated acid functional monomers wherein said acid functional monomers in said inkjet ink binder are heterogeneously distributed and the acid distribution ratio ("R") is greater than or equal to 5.

6. The inkjet ink of claim 5 wherein R is greater than or equal to 10.

7. The inkjet ink of claim 5 wherein said acid functional monomers make up no greater than 15 weight percent (wt. %) on total polymer.

8. The inkjet ink of claim 7 wherein said acid functional monomers make up at least 0.5 wt. % on total polymer.

9. The inkjet ink of claim 5 wherein the colorant is a pigment, a dye, a polymer dispersed dye, or mixtures thereof.

10. An inkjet ink binder comprising, as polymerized units, ethylenically unsaturated acid functional monomers wherein said acid functional monomers in said inkjet ink binder are heterogeneously distributed and the acid distribution ratio ("R") is greater than or equal to 5, whereby the heterogeneous acid distribution is achieved by one or more of:

    (a) varying the acid monomer concentration of the monomer feed during the polymerization reaction;
    (b) using two or more acid functional monomers which differ in their rates of incorporation into said inkjet ink binder;

(c) using at least two monomer mixtures that vary in acid concentration by at least 40 weight percent; or
(d) combinations thereof.

**European Patent Office**

## EUROPEAN SEARCH REPORT

Application Number

EP 05 25 3628

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 1 333 072 A (ROHM AND HAAS COMPANY) 6 August 2003 (2003-08-06) * paragraphs [0012], [0014] - [0016], [0019], [0041], [0042], [0048], [0049] * | 1-10 | C09D11/00 |
| A | EP 1 371 697 A (ROHM AND HAAS COMPANY) 17 December 2003 (2003-12-17) * claims 1-7 * | 1-10 | |
| D,A | EP 0 869 160 A (XEROX CORPORATION) 7 October 1998 (1998-10-07) * the whole document * | 1-10 | |
| D,A | US 6 541 590 B1 (JOHNSON ERIC ALVIN ET AL) 1 April 2003 (2003-04-01) * the whole document * | 1-10 | |

TECHNICAL FIELDS SEARCHED (Int.Cl.7)

C09D

The present search report has been drawn up for all claims

| Place of search | Date of completion of the search | Examiner |
|---|---|---|
| The Hague | 15 September 2005 | Miller, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 25 3628

This annex lists the patent family members relating to the patent documents cited in  the above-mentioned European search report.
The members are as contained in the European Patent Office EDP file on
The European Patent Office is in no way liable for these particulars which are merely  given for the purpose of information.

15-09-2005

| Patent document cited in search report | | Publication date | Patent family member(s) | | Publication date |
|---|---|---|---|---|---|
| EP 1333072 | A | 06-08-2003 | CN | 1435455 A | 13-08-2003 |
|  |  |  | JP | 2003238874 A | 27-08-2003 |
| EP 1371697 | A | 17-12-2003 | BR | 0302071 A | 17-08-2004 |
|  |  |  | JP | 2004250659 A | 09-09-2004 |
| EP 0869160 | A | 07-10-1998 | CA | 2229253 A1 | 30-09-1998 |
|  |  |  | JP | 10279870 A | 20-10-1998 |
| US 6541590 | B1 | 01-04-2003 | US | 2003171516 A1 | 11-09-2003 |
|  |  |  | US | 2003171517 A1 | 11-09-2003 |

EPO FORM P0459

For more details about this annex : see Official Journal of the European Patent Office, No. 12/82